# EUROPEAN PATENT SPECIFICATION

(11) **EP 2 383 860 B1**
(45) Date of publication and mention of the grant of the patent: **27.11.2019**
(21) Application number: 10166784.8
(22) Date of filing: 22.06.2010
(51) Int. Cl.: G06F 1/26, H02J 7/00, H02J 1/00

(54) **Rapid charging apparatus**
Schnellladegerät
Appareil de chargement rapide

(30) Priority: 29.04.2010 TW 099113697; 14.05.2010 TW 099115508
(43) Date of publication of application: 02.11.2011
(73) Proprietor: Giga-Byte Technology Co., Ltd., New Taipei City 231 (TW)
(72) Inventor: Lin, Hou-Yuan, 231, Hsin Tien, taipei County (TW); Chen, Chen-Shun, 231, Hsin Tien, Taipei County (TW); Chen, Kuei-Min, 231, Hsin Tien, Taipei County (TW); Liao, Tse-Hsine, 231, Hsin Tien, Taipei County (TW)
(74) Representative: Becker Kurig Straus

(56) References cited:
- EP-A2- 1 487 081
- US-A1- 2006 015 757
- US-A1- 2007 046 268
- US-A1- 2008 265 838
- US-A1- 2009 119 520
- "Universal Serial Bus Specification Revision 2.0 - Chapter 7 - Electrical", , 27 April 2000 (2000-04-27), pages 119-192, XP002751851, Retrieved from the Internet: URL:http://www.usb.org/developers/docs/usb 20_docs/#usb20spec [retrieved on 2015-12-07]

## Description

### BACKGROUND OF THE INVENTION

### Field of the Invention

The invention relates generally to a rapid charging apparatus, and more particularly, to a rapid charging apparatus of an electronic device.

### Description of Related Art

As mobile phones become more and more prevalent, they have undisputedly replaced the traditional phone for many people while becoming one of the most convenient communication mediums. However, a mobile phone merely possessing basic capabilities for talk, web browsing, and multimedia playback has slowly become insufficient to satisfy the increasing multitude of needs of the consumer. In order to meet the consumer needs, manufacturers of mobile products have increasingly turned to developing smartphones having superior functionalities and enhanced expandability, thereby seeking to increase their market shares.

Since the smartphone has mostly the same capabilities as the personal computer, data can be transferred back and forth between the smartphone and the personal computer through a connective line to a connection port of the personal computer. The connection port can be a Universal Serial Bus (USB) connection port, for example. While data transfer occurs between the smartphone and the personal computer, the smartphone can charge a battery therein through the connection port receiving a power from the personal computer.

Moreover, since digital cameras, MP3, and MP4 devices have experienced rapid growth, the use of multimedia devices have become widespread. Furthermore, the multimedia devices can connect with the personal computer to receive data therefrom, or to transfer data to the personal computer. Data can be transferred back and forth between the multimedia devices and the personal computer through a connective line to a connection port of the personal computer, in which the connection port can be a USB connection port, for instance. While data transfer occurs between the multimedia devices and the personal computer, some multimedia devices can charge a battery therein through the connection port receiving a power from the personal computer.

There are some prior arts for that, in one prior art, EP 1487081A2, it is disclosed a system and methods for charging a rechargeable power source in a mobile device through a USB port. The USB charger includes a power converter, a signal generator and a USB connector. In another one prior art, "Universal Serial Bus Specification Revision 2.0 - Chapter 7 - Electrical", it is disclosed an USB specification which regulates the standard of the electrical of the USB 2.0. US 2009/119 520 A1 discloses an information processing apparatus having a function of charging an externally connected peripheral device. The external device which is capable of being charged from a USB port and there is an external device which can be charged rapidly and there is an external device which can be charged only at a normal speed. The apparatus includes a USB port made to be able to switch a USB charge control signal to LOW (voltage) or HIGH voltage.

In view of the above, due to the ubiquity of the computer, it is increasingly common to charge multimedia devices and smartphones through the personal computer. Therefore, a primary issue is how to rapidly charge multimedia devices or smartphones.

### SUMMARY OF THE INVENTION

An aspect of the invention provides a rapid charging apparatus capable of turning on a rapid charging function of an electronic device.

An aspect of the invention provides a rapid charging apparatus including a first connection unit, a second connection unit, and a rapid charging power transformation unit. The first connection unit is connectable to a connector for receiving a power. The rapid charging power transformation unit is coupled to the first connection unit to receive a voltage of the connector and to provide a first voltage and a second voltage. The first voltage ranges from 3.2 V to 1.1 V, the second voltage ranges from 2.7 V to 0.6 V, and a voltage difference between the first voltage and the second voltage ranges from 0.5 V to 0.8 V. The second connection unit is connectable to the electronic device and the rapid charging power transformation unit, so as to transmit the first voltage and the second voltage to the electronic device, whereby the first voltage and the second voltage can turn on a rapid charging function of the electronic device.

According to an embodiment of the invention, the rapid charging apparatus further comprises a switch having an input terminal, a first connection terminal, and a second connection terminal, wherein the input terminal is coupled to the first connection unit, the first connection terminal is coupled to the second connection unit, and the second connection terminal is coupled to the rapid charging transformation unit.

According to an embodiment of the invention, the rapid charging power transformation unit includes a first resistor, a second resistor, a third resistor, and a fourth resistor. The first resistor has a first terminal coupled to the voltage of the connector, and a second terminal outputting the first voltage. The second resistor has a first terminal coupled to the second terminal of the first resistor, and a second terminal coupled to a ground voltage. The third resistor has a first terminal coupled to the voltage of the connector, and a second terminal outputting the second voltage. The fourth resistor has a first terminal coupled to the second terminal of the third resistor, and a second terminal coupled to the ground voltage.

According to an embodiment of the invention, the first connection unit is a Universal Serial Bus (USB) plug, and the second connection unit is a USB connection port.

According to an embodiment of the invention, the first voltage and the second voltage are respectively transmitted to the electronic device through a first data pin and a second data pin of the second connection unit.

According to an embodiment of the invention, the first connection unit is an IEEE 1394 plug, and the second connection unit is a USB connection port.

According to an embodiment of the invention, the first connection unit and the second connection unit are respectively a plug having a transfer power or a connection port having the transfer power.

According to an embodiment of the invention, the first connection unit and the second connection unit are connection interfaces of a same type or a same form.

According to an embodiment of the invention, the first connection unit and the second connection unit are connection interfaces of different types.

In summary, in the rapid charging apparatus according to embodiments of the invention, the rapid charging power transformation unit and the rapid charging power turn-on unit thereof provide the first and second voltages which can turn on the rapid charging function of the electronic device (e.g., smartphones or handheld multimedia devices). When the electronic device is coupled to the connector with power through the rapid charging apparatus, the electronic device receives the first and second voltages such that the rapid charging function thereof is turned on, and thereby accelerating a charging speed of the electronic device.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a system block diagram of a rapid charging apparatus in accordance with an embodiment of the invention.
FIG. 2 is a circuit diagram of the rapid charging power transformation unit depicted in FIG. 1.
FIG. 3 is a system block diagram of a rapid charging apparatus in accordance with another embodiment of the invention.

### DESCRIPTION OF THE EMBODIMENTS

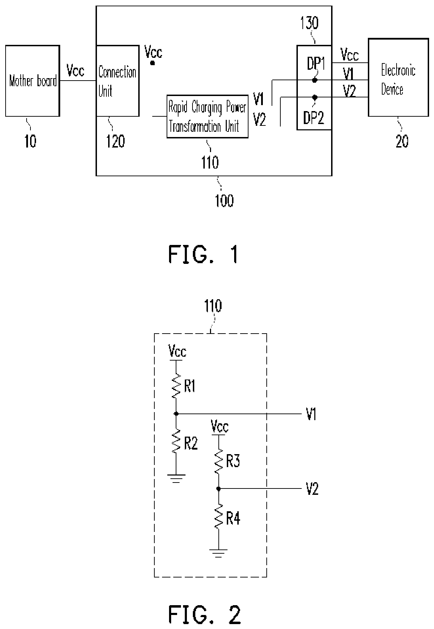

FIG. 1 is a system block diagram of a rapid charging apparatus in accordance with an embodiment of the invention. Referring to FIG. 1, in the present embodiment, an electronic device 20 may be a smartphone or a handheld multimedia device, in which the smartphone is an iPhone, and the handheld multimedia device is an iPad or an iPod, for example. A rapid charging apparatus 100 includes a rapid charging power transformation unit 110, a first connection unit 120, and a second connection unit 130. The first connection unit 120 can be a plug which can also be a Universal Serial Bus (USB) plug (e.g., a plug having a transfer power), for plugging into a USB connection port (e.g., a connector with a power) of a mother board 10. At this moment, the first connection unit 120 is coupled to the mother board 10 to receive a system voltage Vcc (e.g., a voltage of the connector) of the mother board 10. The system voltage Vcc can be an operating voltage or a standby voltage of the mother board 10.

On the other hand, the second connection port 130 can be a connection port which can also be a USB connection port (e.g, a connection port having the transfer power), so as to connect a connective line of the electronic device 20 with the second connection unit 130, and thereby coupling the second connection unit 130 with the electronic device 20. Moreover, the second connection unit 130 is coupled to the first connection unit 120, for transmitting the system voltage Vcc of the mother board 10 to the electronic device 20.

The rapid charging power transformation unit 110 is coupled to the first connection unit 120 to receive the system voltage Vcc of the mother board 10, and coupled to the second connection unit 130 to provide a first voltage V1 and a second voltage V2 to the electronic device 20. The first voltage V1 ranges from 3.2 V to 1.1 V, the second voltage V2 ranges from 2.7 V to 0.6 V, and a voltage difference between the first voltage V1 and the second voltage V2 ranges from 0.5 V to 0.8 V. Moreover, the first voltage V1 and the second voltage V2 can turn on a rapid charging function of the electronic device 20.

More specifically, the first voltage V1 of the rapid charging power transformation unit 110 is transmitted to a first data pin DP 1 of the second connection unit 130, so as to transmit the first voltage V1 to the electronic device 20 through the first data pin DP1. Additionally, the second voltage V2 of the rapid charging power transformation unit 110 is transmitted to a second data pin DP2 of the second connection unit 130, so as to transmit the second voltage V2 to the electronic device 20 through the second data pin DP2. The first data pin DP1 can be a positive data pin (D+) of the USB connection port, whereas the second data pin DP2 can be a negative data pin (D-) of the USB connection port.

In view of the foregoing, when the electronic device 20 is coupled to the mother board 10 through the rapid charging apparatus 100, the electronic device 20 receives the first voltage V1 and the second voltage V2 provided by the rapid charging power transformation unit 110, and the electronic device 20 receives the system voltage Vcc of the mother board 10 through the first connection unit 120 and the second connection unit 130. At this moment, the electronic device 20 is controlled by the first voltage V1 and the second voltage V2 to turn on a rapid charging function thereof, such that the electronic device 20 can receive the system voltage Vcc of the mother board 100 to perform rapid battery charging.

It should be noted that, the afore-described embodiment exemplifies the power providing device with the mother board. However, in other embodiments of the invention, electronic devices having USB connection ports may also be used as power providing devices, for instance chargers or power suppliers having USB connection ports. Moreover, the first connection unit 120 may also be an IEEE 1394 plug, adapted for coupling to an IEEE 1394 connection port of the mother board 10, thereby receiving the system voltage Vcc of the mother board 10. Furthermore, the type of the second connection unit 130 may be altered according to the plug of the connective line of the electronic device 20. Besides, the first connection unit 120 and the second connection unit 130 may be connection interfaces of a same type (e.g., USB or IEEE 1394) or a same form (e.g., plugs or connection ports), or connection interfaces of different types or different forms, as may be stipulated by a design requirement.

FIG. 2 is a circuit diagram of the rapid charging power transformation unit depicted in FIG. 1. Referring to FIG. 2, in the present embodiment, the rapid charging power transformation unit 130 includes a first resistor R1, a second resistor R2, a third resistor R3, and a fourth resistor R4. The first resistor R1 has a first terminal coupled to the system voltage Vcc, and a second terminal outputting the first voltage V1. The second resistor R2 has a first terminal coupled to the second terminal of the first resistor R1, and a second terminal coupled to a ground voltage. The third resistor R3 has a first terminal coupled to the system voltage Vcc, and a second terminal outputting the second voltage V2. The fourth resistor R4 has a first terminal coupled to the second terminal of the third resistor R3, and a second terminal coupled to the ground voltage.

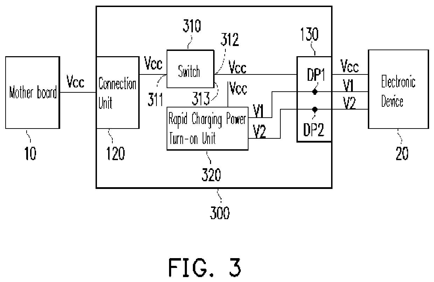

FIG. 3 is a system block diagram of a rapid charging apparatus in accordance with another embodiment of the invention. Referring to FIGs. 1 and 3, a difference in the present embodiment resides in a switch 310 and a rapid charging power turn-on unit 320 of a rapid charging apparatus 300. The switch 310 has an input terminal 311 coupled to the first connection unit 120 to receive a power (e.g., the system voltage Vcc) therefrom, a first connection terminal 312 coupled to the second connection unit 130 to transmit the system voltage Vcc thereto, and a second connection terminal 313 coupled to the rapid charging power turn-on unit 320 to determine whether to transmit the system voltage Vcc thereto.

When the rapid charging power turn-on unit 320 receives the system voltage Vcc, the first voltage V1 and the second voltage V2 are provided by using the system voltage Vcc, and the first and second voltages V1 and V2 are transmitted to the second connection unit 130. At this moment, the first and second voltages V1 and V2 are transmitted to the electronic device 20 to turn on the rapid charging function thereof through the second connection unit 130, such that the electronic device 20 rapidly charges a battery thereof by using the system voltage Vcc. Since the circuit structure of the rapid charging power turn-on unit 320 is similar to that of the rapid charging power transformation unit 110, further description is omitted hereafter.

In light of the foregoing description, in the rapid charging apparatus according to embodiments of the invention, the rapid charging power transformation unit and the rapid charging power turn-on unit thereof provide the first and second voltages which can turn on the rapid charging function of the electronic device (e.g., smartphones or handheld multimedia devices). When the electronic device is coupled to the connector of the mother board (or a connector of another electronic device) through the rapid charging apparatus, the electronic device receives the first and second voltages such that the rapid charging function thereof is turned on, and thereby accelerating a charging speed of the electronic device.

## Claims

1. A rapid charging apparatus (100), comprising:
a first connection unit (120), connectable to a connector for receiving a power;
a rapid charging power transformation unit (110), coupled to the first connection unit (120) to receive a voltage of the connector and to provide a first voltage and a second voltage, wherein the first voltage ranges from 3.2 V to 1.1 V, the second voltage ranges from 2.7 V to 0.6 V, and a voltage difference between the first voltage and the second voltage ranges from 0.5 V to 0.8 V; and
a second connection unit (130), connectable to an electronic device (20) and the rapid charging power transformation unit (110) so as to transmit the first voltage and the second voltage to the electronic device (20), whereby the first voltage and the second voltage can turn on a rapid charging function of the electronic device.

2. The rapid charging apparatus (100) as claimed in claim 1, **characterized in that** it further comprises a switch (310) having an input terminal (311), a first connection terminal (312), and a second connection terminal (313), wherein the input terminal (311) is coupled to the first connection unit (120), the first connection terminal (312) is coupled to the second connection unit (130), and the second connection terminal (313) is coupled to the rapid charging transformation unit (110).

3. The rapid charging apparatus (100) as claimed in claim 1 or claim 2, **characterized in that** the rapid charging power transformation unit (110) comprises:
a first resistor (R1) having a first terminal coupled to the voltage of the connector, and a second terminal outputting the first voltage;
a second resistor (R2) having a first terminal coupled to the second terminal of the first resistor, and a second terminal coupled to a ground voltage;
a third resistor (R3) having a first terminal coupled to the voltage of the connector, and a second terminal outputting the second voltage; and
a fourth resistor (R4) having a first terminal coupled to the second terminal of the third resistor (R3), and a second terminal coupled to the ground voltage.

4. The rapid charging apparatus (100) as claimed in claim 1 or claim 2, **characterized in that** the first connection unit (120) is a Universal Serial Bus (USB) plug, and the second connection unit (130) is a USB connection port.

5. The rapid charging apparatus (100) as claimed in claim 4, **characterized in that** the first voltage and the second voltage are respectively transmitted to the electronic device (20) through a first data pin and a second data pin of the second connection unit (130).

6. The rapid charging apparatus (100) as claimed in claim 1 or claim 2, **characterized in that** the first connection unit (120) is an IEEE 1394 plug, and the second connection unit (130) is a USB connection port.

7. The rapid charging apparatus (100) as claimed in claim 1 or claim 2, **characterized in that** the first connection unit (120) and the second connection unit (130) are respectively a plug having a transfer power or a connection port having the transfer power.

8. The rapid charging apparatus (100) as claimed in claim 7, **characterized in that** the first connection unit (120) and the second connection unit (130) are connection interfaces of a same type or a same form.

9. The rapid charging apparatus (100) as claimed in claim 8, **characterized in that** the first connection unit (120) and the second connection unit (130) are connection interfaces of different types.

## Patentansprüche

1. Schnellladevorrichtung (100), umfassend:
eine erste Verbindungseinheit (120), die mit einem Verbinder zum Empfangen einer Energie verbindbar ist;
eine Schnelllade-Energietransformationseinheit (110), die mit der ersten Verbindungseinheit (120) gekoppelt ist, um eine Spannung des Verbinders zu empfangen und um eine erste Spannung und eine zweite Spannung bereitzustellen, wobei die erste Spannung von 3,2 V bis 1,1 V reicht, die zweite Spannung von 2,7 V bis 0,6 V reicht und eine Spannungsdifferenz zwischen der ersten Spannung und der zweiten Spannung von 0,5 V bis 0,8 V reicht; und
eine zweite Verbindungseinheit (130), die mit einer elektronischen Gerät (20) und der Schnelllade-Energietransformationseinheit (110) verbindbar ist, um die erste Spannung und die zweite Spannung an das elektronische Gerät (20) zu übertragen, wobei die erste Spannung und die zweite Spannung eine Schnelllade-Funktion des elektronischen Geräts anschalten können.

2. Schnellladevorrichtung (100) gemäß Anspruch 1, **dadurch gekennzeichnet, dass** sie weiterhin einen Schalter (310) mit einem Eingangsanschluss (311), einen ersten Verbindungsanschluss (312) und einen zweiten Verbindungsanschluss (313) umfasst, wobei der Eingangsanschluss (311) mit der ersten Verbindungseinheit (120) gekoppelt ist, der erste Verbindungsanschluss (312) mit dem zweiten Verbindungsanschluss (130) gekoppelt ist und der zweite Verbindungsanschluss (313) mit der Schnelllade-Transformationseinheit (110) gekoppelt ist.

3. Schnellladevorrichtung (100) gemäß Anspruch 1 oder Anspruch 2, **dadurch gekennzeichnet, dass** die Schnelllade-Energietransformationseinheit (110) umfasst:
einen ersten Widerstand (R1) mit einem ersten Anschluss, der mit der Spannung des Verbinders gekoppelt ist, und einen zweiten Anschluss, der die erste Spannung ausgibt;
einen zweiten Widerstand (R2) mit einem ersten Anschluss, der mit dem zweiten Anschluss des ersten Widerstands gekoppelt ist, und einen zweiten Anschluss, der mit einer Erdungsspannung gekoppelt ist;
einen dritten Widerstand (R3) mit einem ersten Anschluss, der mit der Spannung des Verbinders gekoppelt ist, und einen zweiten Anschluss, der die zweite Spannung ausgibt; und
einen vierten Widerstand (R4) mit einem ersten Anschluss, der mit dem zweiten Anschluss des dritten Widerstands (R3) gekoppelt ist, und einen zweiten Anschluss, der mit der Erdungsspannung gekoppelt ist.

4. Schnellladevorrichtung (100) gemäß Anspruch 1 oder Anspruch 2, **dadurch gekennzeichnet, dass** die erste Verbindungseinheit (120) ein Universal Serial Bus (USB)-Stecker ist und die zweite Verbindungseinheit (130) ein USB-Verbindungsport ist.

5. Schnellladevorrichtung (100) gemäß Anspruch 4, **dadurch gekennzeichnet, dass** die erste Spannung und die zweite Spannung entsprechend über einen ersten Datenpin und einen zweiten Datenpin der zweiten Verbindungseinheit (130) an das elektronische Gerät (20) übertragen werden.

6. Schnellladevorrichtung (100) gemäß Anspruch 1 oder Anspruch 2, **dadurch gekennzeichnet, dass** die erste Verbindungseinheit (120) ein IEEE 1394-Stecker ist und die zweite Verbindungseinheit (130) ein USB-Verbindungsport ist.

7. Schnellladevorrichtung (100) gemäß Anspruch 1 oder Anspruch 2, **dadurch gekennzeichnet, dass** die erste Verbindungseinheit (120) und die zweite Verbindungseinheit (130) entsprechend ein Stecker mit einer Übertragungsenergie oder ein Verbindungsport mit der Übertragungsenergie sind.

8. Schnellladevorrichtung (100) gemäß Anspruch 7, **dadurch gekennzeichnet, dass** die erste Verbindungseinheit (120) und die zweite Verbindungseinheit (130) Verbindungsschnittstellen gleichen Typs oder gleicher Form sind.

9. Schnellladevorrichtung (100) gemäß Anspruch 8, **dadurch gekennzeichnet, dass** die erste Verbindungseinheit (120) und die zweite Verbindungseinheit (130) Verbindungsschnittstellen unterschiedlicher Art sind.

## Revendications

1. Appareil de charge rapide (100), comprenant :
une première unité de connexion (120), connectable à un connecteur pour recevoir de l'énergie ;
une unité de transformation d'énergie de charge rapide (110), couplée à la première unité de connexion (120) pour recevoir une tension du connecteur et pour fournir une première tension et une deuxième tension, dans lequel la première tension est comprise entre 3,2 V et 1,1 V, la deuxième tension est comprise entre 2,7 V et 0,6 V, et la différence de tension entre la première tension et la deuxième tension est comprise entre 0,5 V et 0,8 V ; et
une deuxième unité de connexion (130), connectable à un dispositif électronique (20) et à l'unité de transformation d'énergie de charge rapide (110) de manière à transmettre la première tension et la deuxième tension au dispositif électronique (20), moyennant quoi la première tension et la deuxième tension peuvent activer une fonction de charge rapide du dispositif électronique.

2. Appareil de charge rapide (100) selon la revendication 1, **caractérisé en ce qu'**il comprend en outre un interrupteur (310) qui comporte une borne d'entrée (311), une première borne de connexion (312), et une deuxième borne de connexion (313), dans lequel la borne d'entrée (311) est couplée à la première unité de connexion (120), la première borne de connexion (312) est couplée à la deuxième unité de connexion (130), et la deuxième borne de connexion (313) est couplée à l'unité de transformation de charge rapide (110) .

3. Appareil de charge rapide (100) selon la revendication 1 ou 2, **caractérisé en ce que** l'unité de transformation d'énergie de charge rapide (110) comprend :
une première résistance (R1) comportant une première borne couplée à la tension du connecteur, et une deuxième borne sortant la première tension ;
une deuxième résistance (R2) comportant une première borne couplée à la deuxième borne de la première résistance, et une deuxième borne couplée à une tension de terre ;
une troisième résistance (R3) comportant une première borne couplée à la tension du connecteur, et une deuxième borne sortant la deuxième tension ; et
une quatrième résistance (R4) comportant une première borne couplée à la deuxième borne de la troisième résistance (R3), et une deuxième borne couplée à la tension de terre.

4. Appareil de charge rapide (100) selon la revendication 1 ou 2, **caractérisé en ce que** la première unité de connexion (120) est une prise de bus universel en série (USB), et la deuxième unité de connexion (130) est un port de connexion USB.

5. Appareil de charge rapide (100) selon la revendication 4, **caractérisé en ce que** la première tension et la deuxième tension sont transmises respectivement au dispositif électronique (20) via une première broche de données et une deuxième broche de données de la deuxième unité de connexion (130).

6. Appareil de charge rapide (100) selon la revendication 1 ou 2, **caractérisé en ce que** la première unité de connexion (120) est une prise IEEE 1394, et la deuxième unité de connexion (130) est un port de connexion USB.

7. Appareil de charge rapide (100) selon la revendication 1 ou 2, **caractérisé en ce que** la première unité de connexion (120) et la deuxième unité de connexion (130) sont respectivement une prise ayant une puissance de transfert ou un port de connexion ayant la puissance de transfert.

8. Appareil de charge rapide (100) selon la revendication 7, **caractérisé en ce que** la première unité de connexion (120) et la deuxième unité de connexion (130) sont des interfaces connectables d'un même type et d'une même forme.

9. Appareil de charge rapide (100) selon la revendication 8, **caractérisé en ce que** la première unité de connexion (120) et la deuxième unité de connexion (130) sont des interfaces connectables de différents types.
